# EUROPEAN PATENT APPLICATION

(11) **EP 4 362 208 A1**
(43) Date of publication of application: **01.05.2024**
(21) Application number: 22828349.5
(22) Date of filing: 17.06.2022
(51) Int. Cl.: H01M 50/533, H01M 50/152, H01M 50/538, H01M 50/559, H01M 50/566

(54) **SEALED BATTERY**

(30) Priority: 25.06.2021 JP 2021105864; 10.11.2021 JP 2021183444
(71) Applicant: Panasonic Energy Co., Ltd., Osaka 570-8511 (JP)
(72) Inventor: OKIMOTO Ryota, Kadoma-shi, Osaka 571-0057 (JP); OKUTANI Oose, Kadoma-shi, Osaka 571-0057 (JP); HARAGUCHI Shin, Kadoma-shi, Osaka 571-0057 (JP); HASEGAWA Takasumi, Kadoma-shi, Osaka 571-0057 (JP); TSURUDOME Naoyuki, Kadoma-shi, Osaka 571-0057 (JP)
(74) Representative: Novagraaf International SA
(86) International application number: PCT/JP2022/024310
(87) International publication number: WO 2022/270432

(57) **Abstract**

A sealed battery that is an example of an embodiment comprises: an electrode body; an outer can that houses the electrode body; and a seal body that closes an opening of the outer can. The seal body includes: a cap; and a current collector plate that is located closer to the electrode body than the cap and that is welded to the cap. The current collector plate has, in a portion thereof welded to the cap, a recess protruding toward the cap.

## Description

### TECHNICAL FIELD

The present disclosure relates to a sealed battery, and in particular to a circular cylindrical sealed battery.

### BACKGROUND

In recent years, sealed batteries such as circular cylindrical batteries are used as batteries for equipping on vehicles, in addition to as batteries for mobile usages, and a further improvement in output is demanded. In general, the sealed battery includes an electrode assembly, an outer housing can having a cylindrical shape with a bottom, that houses the electrode assembly, and a sealing assembly that blocks an opening of the outer housing can. The sealing assembly includes a cap, and a current collector plate to which an electrode lead extending from the electrode assembly is connected, and has a structure in which the cap and the current collector plate are welded to each other.

In the sealed battery, improving the sealing property of the inside of the battery by preventing leakage of an electrolyte solution is an important issue. For example, Patent Literature 1 discloses a sealed battery in which a recess-protrusion portion is formed on an outer surface of an outer circumferential portion of a cap so as to cause an anchoring effect with respect to a gasket, so that a solution-leakage resistance and sealing property are improved. Patent Literature 2 discloses a sealed battery in which the gasket is caused to contact an inner wall of the outer housing can at a position inner than a groove portion of the outer housing can, so that creeping-up of the electrolyte solution along the inner wall of the outer housing can is reduced and airtightness is improved.

### CITATION LIST

### PATENT LITERATURE

PATENT LITERATURE 1: JP 2001-291498 A
PATENT LITERATURE 2: JP 2003-045476 A

### SUMMARY

### PROBLEM TO BE SOLVED

While a sealed battery is produced by, for example, housing the electrode assembly within the outer housing can and injecting the electrolyte solution, and then welding the cap and the current collector plate of the sealing assembly together, as a result of studies of the present inventors, the present inventors found that a welding deficiency may be caused between the cap and the current collector plate due to the electrolyte solution adhered to the current collector plate. If the electrolyte solution is present at a welding location when the cap and the current collector plate are laser-welded, a small hole may be formed on the cap due to vaporized electrolyte solution.

An advantage of the present disclosure lies in provision of a sealed battery having a superior welding state between the cap and the current collector plate of the sealing assembly.

### SOLUTION TO PROBLEM

According to one aspect of the present disclosure, there is provided a sealed battery including: an electrode assembly; an outer housing can that houses the electrode assembly; and a sealing assembly that blocks an opening of the outer housing can, wherein the sealing assembly includes a cap, and a current collector plate which is placed at a side nearer to the electrode assembly than the cap and which is welded to the cap, and the current collector plate has a protrusion which protrudes toward the cap at a welding portion with the cap.

### ADVANTAGEOUS EFFECTS

A sealed battery of an aspect of the present disclosure has a superior welding state between the cap and the current collector plate of the sealing assembly, and is superior in, for example, the sealing property.

### BRIEF DESCRIPTION OF DRAWINGS

FIG. 1 is a cross-sectional diagram of a sealed battery according to an embodiment of the present disclosure.
FIG. 2 is a front view of an electrode to which an electrode lead is connected.
FIG. 3 is an enlarged view of an A part in FIG. 1.
FIG. 4 is a plan view of a first insulating plate, in a state in which the first insulating plate is placed over an electrode assembly.
FIG. 5 is a plan view of a second insulating plate, in a state in which the second insulating plate is placed over the electrode assembly.
FIG. 6 is a diagram showing in an enlarged manner a part of a cross section of a sealing assembly according to another configuration of an embodiment of the present disclosure, in a state before a cap and a current collector plate are welded together.
FIG. 7 is a diagram showing in an enlarged manner a part of a cross section of the sealing assembly according to the other configuration of the embodiment of the present disclosure, in a state after the cap and the current collector plate are welded together.

### DESCRIPTION OF EMBODIMENTS

A sealed battery according to an embodiment of the present disclosure will now be described in detail with reference to the drawings. Structures obtained through selective combinations of a plurality of embodiments and alternative configurations described below are within the scope of the present disclosure.

A structure of a sealed battery according to an embodiment of the present disclosure is desirable for a circular cylindrical battery having an outer housing can having a circular cylindrical shape with a bottom. However, the outer housing which is a part of the sealed battery is not limited to the outer housing can of the circular cylindrical shape, and may be, for example, an outer housing can of a prismatic shape (prismatic battery). Further, the electrode assembly is not limited to an electrode assembly of a wound type, and may alternatively be an electrode assembly of a layered type in which a plurality of positive electrodes and a plurality of negative electrodes are alternately layered with separators therebetween.

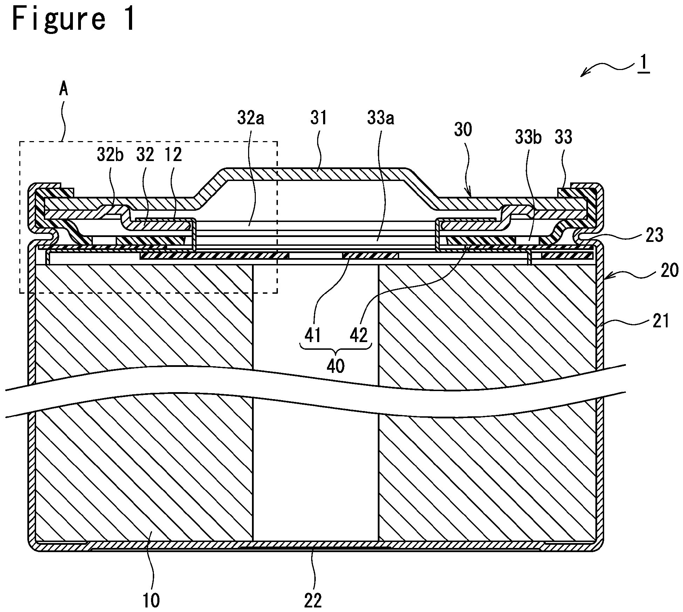

FIG. 1 is a cross-sectional diagram of a circular cylindrical battery 1 according to an embodiment of the present disclosure. As shown in FIG. 1, the circular cylindrical battery 1 includes an electrode assembly 10, an outer housing can 20 which houses the electrode assembly 10 and which has a circular cylindrical shape with a bottom, and a sealing assembly 30 which blocks an opening of the outer housing can 20. The outer housing can 20 houses an electrolyte solution along with the electrode assembly 10. The electrolyte solution may be an aqueous electrolyte solution, but in the present embodiment, a non-aqueous electrolyte solution is used. The outer housing can 20 has a groove portion 23 formed on a side wall 21, and the sealing assembly 30 is supported by the groove portion 23 and blocks the opening of the outer housing can 20. In the following, for convenience of description, a side of the circular cylindrical battery 1 near the sealing assembly 30 will be referred to as an "upper side", and a side near a can bottom 22 of the outer housing can 20 will be referred to as a "lower side". In the present disclosure, an up-and-down direction of the circular cylindrical battery 1 and a thickness direction of the sealing assembly 30 coincide with each other.

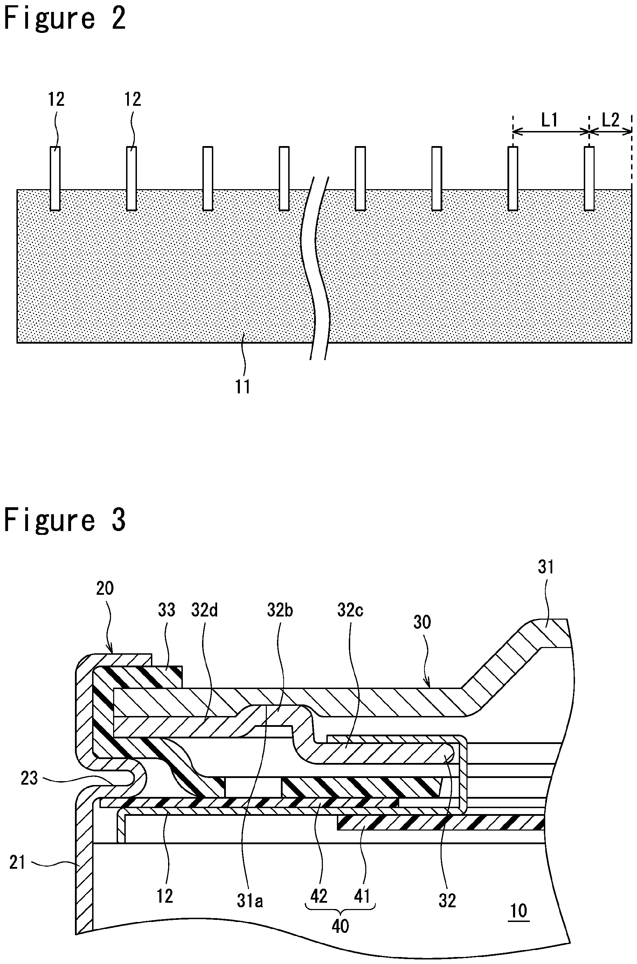

The circular cylindrical battery 1 further includes an electrode lead which extends from a position opposing the groove portion 23 at an outer circumferential side of the electrode assembly 10, and which directly connects a first electrode which is a part of the electrode assembly 10 and a current collector plate 32 of the sealing assembly 30, and an upper insulating plate 40 placed between the electrode assembly 10 and the sealing assembly 30. The electrode assembly 10 is a wound-type electrode assembly in which the first electrode and a second electrode are wound with a separator therebetween. In the present embodiment, the first electrode is a positive electrode 11 (refer to FIG. 2 to be described later), the second electrode is a negative electrode, and the electrode lead described above is a positive electrode lead 12. The circular cylindrical battery 1 may further include a lower insulating plate placed between the electrode assembly 10 and the can bottom 22.

As will be described later in detail, the positive electrode lead 12 electrically connects the positive electrode 11 and the sealing assembly 30, and a negative electrode lead electrically connects the negative electrode and the outer housing can 20. As such, the sealing assembly 30 functions as a positive electrode external terminal, and the outer housing can 20 functions as a negative electrode external terminal. The upper insulating plate 40 prevents contact of the positive electrode 11 and the positive electrode lead 12 with the outer housing can 20, and also prevents contact of the positive electrode lead 12 with the negative electrode of the electrode assembly 10.

The electrode assembly 10 includes the positive electrode 11, the negative electrode, and the separator, and has a wound structure in which the positive electrode 11 and the negative electrode are wound in a spiral shape with the separator therebeween. Each of the positive electrode 11, the negative electrode, and the separator is an elongated member of a band shape, and these elements are alternately layered in a radial direction of the electrode assembly 10 by being wound in the spiral shape. The negative electrode is formed in a slightly larger size than the positive electrode 11 in order to prevent precipitation of lithium. That is, the negative electrode is formed longer in a longitudinal direction and a width direction (short-side direction) than the positive electrode 11. The separator is formed in a slightly larger size at least than the positive electrode 11, and, for example, two separators are placed sandwiching the positive electrode 11.

The positive electrode 11 includes a positive electrode core and a positive electrode mixture layer formed over at least one surface of the positive electrode core. For the positive electrode core, there may be employed a foil of a metal which is stable within a potential range of the positive electrode 11 such as aluminum and an aluminum alloy, a film on a surface layer of which the metal is placed, or the like. The positive electrode mixture layer includes a positive electrode active material, an electrically conductive material such as acetylene black, and a binder agent such as polyvinylidene fluoride, and is desirably provided over both surfaces of the positive electrode core. As the positive electrode active material, for example, a lithium-transition metal composite oxide is employed. While the positive electrode lead 12 is connected to the positive electrode 11, the positive electrode lead 12 is desirably directly joined to the positive electrode core through welding or the like.

The negative electrode includes a negative electrode core, and a negative electrode mixture layer formed over at least one surface of the negative electrode core. For the negative electrode core, there may be employed a foil of metal stable within a potential range of the negative electrode such as copper and a copper alloy, a film on a surface layer of which the metal is placed, or the like. The negative electrode mixture layer includes a negative electrode active material and a binder agent such as styrene-butadiene rubber (SBR), and is desirably formed over both surfaces of the negative electrode core. For the negative electrode active material, for example, graphite, a silicon-containing compound, or the like is employed. The negative electrode lead is desirably directly joined to the negative electrode core by welding or the like. Alternatively, the negative electrode core and the outer housing can 20 may be electrically connected to each other, without the negative electrode lead provided therebetween.

The non-aqueous electrolyte housed in the outer housing can 20 includes a non-aqueous solvent and an electrolyte salt dissolved in the non-aqueous solvent. For the non-aqueous solvent, for example, esters, ethers, nitriles, amides, or a mixture solvent of two or more of these solvents may be employed. The non-aqueous solvent may include a halogen-substituted product in which at least a part of hydrogen atoms of the solvent described above is substituted with a halogen atom such as fluorine. Examples of the non-aqueous solvent include ethylene carbonate (EC), ethyl methyl carbonate (EMC), dimethyl carbonate (DMC), and a mixture solvent of these solvents. For the electrolyte salt, for example, a lithium salt such as LiPF₆ is used.

The outer housing can 20 is a metal container having a circular cylindrical shape with a bottom, with one end in an axial direction (upper end) opened, and includes a side wall 21 formed in a circular cylindrical shape, and the can bottom 22 having a circular shape in a bottom view. In general, the outer housing can 20 is formed from metals having iron as a primary component, but may alternatively be formed from metals having aluminum or the like as the primary component. In addition, the outer housing can 20 has the groove portion 23 formed along a circumferential direction of the side wall 21. The groove portion 23 is formed at a position distanced from an opening edge (upper end of the outer housing can 20) by a predetermined length, near the opening of the outer housing can 20. The predetermined length is, for example, a length corresponding to 1-20% of a length of the outer housing can 20 in the axial direction.

In the present embodiment, a safety vent mechanism which is actuated during occurrence of abnormality in the circular cylindrical battery 1 is provided on the can bottom 22 of the outer housing can 20. On the other hand, the safety vent mechanism is not provided on the sealing assembly 30. On the can bottom 20, for example, a thin-thickness portion is formed. When abnormality occurs in the circular cylindrical battery 1 and an internal pressure thereof increases, the thin-thickness portion ruptures first, and a discharge port for gas is formed on the can bottom 22.

The groove portion 23 is a portion where a part of the side wall 21 protrudes toward an inner side of the outer housing can 20, and is formed, for example, by spinningmachining the side wall 21 from the outer side. At a position where the groove portion 23 is formed, a diameter of the outer housing can 20 is reduced, and a narrow line-shape groove is formed on an outer circumferential surface of the side wall 21. The groove portion 23 has a cross section of approximately U-shape, and is desirably formed in an annular shape over an entire length of the side wall 21 in the circumferential direction. The groove portion 23 is formed by machining the side wall 21 after the electrode assembly 10 is housed in the outer housing can 20.

An inner diameter of the outer housing can 20 at the position of formation of the groove portion 23 is, for example, 80-99% of a maximum inner diameter of the outer housing can 20. An example of a length of the groove portion 23 along a radial direction of the outer housing can 20 is 0.5-2.0 mm. Because a diameter of the electrode assembly 10 is similar to the maximum inner diameter of the outer housing can 20, the electrode assembly 10 and the groove portion 23 are overlapped in an up-and-down direction of the circular cylindrical battery 1. As will be described later in detail, in the present embodiment, a plurality of positive electrode leads 12 are provided along a longitudinal direction of the positive electrode 11 with a predetermined interval, and extend from positions opposing the groove portion 23 at an outer circumferential side of the electrode assembly 10.

The sealing assembly 30 includes a cap 31, a current collector plate 32, and a gasket 33, and is formed in an overall shape of a circular disc. The sealing assembly 30 is placed on the groove portion 23 of the outer housing can 20, and is fixed at an upper end part of the outer housing can 20. The upper end part of the outer housing can 20 is bent inward and crimped with respect to the sealing assembly 30. In other words, the sealing assembly 30 is fixed to the upper end part of the outer housing can 20 by the groove portion 23 of the outer housing can 20 and the crimping portion, and blocks the opening of the outer housing can 20. The crimping portion is formed in an annular shape along the circumferential direction of the outer housing can 20, and sandwiches the sealing assembly 30 along with the groove portion 23.

The cap 31 is a metal member having a circular disc shape, and is exposed to an outside of the outer housing can 20, to form a top surface of the circular cylindrical battery 1. The cap 31 has a shape with a center part in the radial direction protruded toward an outer side of the circular cylindrical battery 1. A wiring member is connected to the cap 31 when the circular cylindrical battery 1 is formed into a module to form a battery pack. Because of this, the cap 31 functions as an external terminal of the circular cylindrical battery 1, and is also called an external terminal or a top cover. In the present embodiment, the positive electrode lead 12 is connected to the current collector plate 32, and the cap 31 functions as a positive electrode external terminal.

The current collector plate 32 is a metal member having a diameter similar to the cap 31, and is placed on a side nearer to the electrode assembly 10 than the cap 31. The current collector plate 32 has an opening 32a at a center part in a radial direction, and is formed in a ring shape. The cap 31 and the current collector plate 32 are welded together. For example, the current collector plate 32 is welded to the cap 31 at a position nearer to the outer periphery than a center part of the cap 31 in the radial direction. A protrusion 32b to be described later is formed on the current collector plate 32, and forms a welding portion with the cap 31. Because, as described above, the positive electrode lead 12 connected to the positive electrode 11 of the electrode assembly 10 is connected to the current collector plate 32, the current collector plate 32 functions as a positive electrode current collector plate.

The gasket 33 is provided at an outer circumferential part of a layered assembly of the cap 31 and the current collector plate 32. The gasket 33 is a resin member for preventing contact of the cap 31 and the current collector plate 32 with the outer housing can 20, to secure insulation between the outer housing can 20 and the sealing assembly 30. At the outer circumferential part of the layered assembly, the gasket 33 covers an upper surface of the cap 31, side surfaces of the cap 31 and the current collector plate 32, and a lower surface of the current collector plate 32. In addition, the gasket 33 blocks a gap between the outer housing can 20 and the sealing assembly 30, to seal the inside of the circular cylindrical battery 1.

The gasket 33 is a resin member of a ring shape, is formed to cover a large part of the lower surface of the current collector plate 32, and interposes between the current collector plate 32 and the upper insulating plate 40. At a center part of the gasket 33 in a radial direction, an opening 33a is formed, which overlaps the opening 32a of the current collector plate 32 in the up-and-down direction. In addition, a through hole 33b is formed on the gasket 33 at a portion positioned blow the current collector plate 32. A situation is presumed in that the electrolyte solution accumulates on the upper surface of the gasket 33, and the electrolyte solution can be efficiently returned to the side of the electrode assembly 10 by providing the through hole 33b. A plurality of the through holes 33b, for example, are formed along the circumferential direction of the gasket 33.

Structures of the positive electrode 11 and the positive electrode lead 12 will now be described in detail with reference to FIG. 2. FIG. 2 is a front view of the positive electrode 11 to which the positive electrode lead 12 is connected, showing a state in which the positive electrode 11 is unfolded.

As shown in FIG. 2, the positive electrode 11 is an elongated element of a band shape, and a plurality of positive electrode leads 12 are connected along a longitudinal direction of the positive electrode 11 with a predetermined interval L1. As described above, the positive electrode 11 includes the positive electrode core and the positive electrode mixture layer. The positive electrode lead 12 is desirably joined by welding or the like to an exposed portion of the positive electrode core over which the positive electrode mixture layer is not formed. In FIG. 2, the positive electrode leads 12 are shown with the same length, but alternatively, the lengths of adjacent positive electrode leads 12 may differ from each other. For example, a positive electrode lead 12, positioned at an outer circumferential side of the electrode assembly 10 when the electrode assembly 10 of the wound structure is formed, is formed longer than a positive electrode lead 12 positioned at an inner circumferential side.

The positive electrode lead 12 is an electrically conductive member of a stripe shape, and is formed from, for example, metals having aluminum as the primary component. The plurality of positive electrode leads 12 extend in the same direction, and from one end in a width direction of the positive electrode 11. In the present embodiment, a one-end side of each of the positive electrode leads 12 in the longitudinal direction is joined to the positive electrode 11, and the other-end side in the longitudinal direction is joined to the current collector plate 32 of the sealing assembly 30, so that the positive electrode 11 and the current collector plate 32 are directly connected to each other by the positive electrode lead 12. Because of this, the current collecting structure from the electrode assembly 10 is simple. Further, the structure in which the positive electrode 11 and the current collector plate 32 are directly connected to each other by the positive electrode lead 12 is also desirable from the viewpoints of lower resistance and improvement of an output characteristic.

No particular limitation is imposed on the number of the positive electrode leads 12, and an example is 3~15 positive electrode leads 12, or 6~10 positive electrode leads 12. The positive electrode leads 12 are desirably provided with an approximately equal interval along the longitudinal direction of the positive electrode 11. The "approximately equal interval" means that, for example, a difference between the maximum value and the minimum value of the intervals L1 between the positive electrode leads 12 is within 10%. In this case, the improvement effect of the output characteristic becomes more significant. An example of the interval L1 between adjacent positive electrode leads 12 is 400~600 mm or 450~550 mm. In addition, at respective ends of the positive electrode 11 in the longitudinal direction, the positive electrode leads 12 are provided at positions distanced from a length L2 from the ends of the positive electrode mixture layer in the longitudinal direction. The length L2 desirably corresponds to about 1/2 of the interval L1.

Because the positive electrode leads 12 are placed at the approximately equal interval along the longitudinal direction of the positive electrode 11, the positive electrode leads 12 extend toward the sealing assembly 30 not only from the inner circumferential side of the electrode assembly 10, but also from the outer circumferential side thereof. Further, at least one of the positive electrode leads 12 extends toward the sealing assembly 30 from a position opposing the groove portion 23 of the outer housing can 20. In the present embodiment, a plurality of positive electrode leads 12 are joined to the positive electrode 11 at positions opposing the groove portion 23.

Structures of the current collector plate 32 of the sealing assembly 30 to which the positive electrode lead 12 is connected, and the cap 31 to which the current collector plate 32 is welded will now be described in detail with reference to FIG. 3. FIG. 3 is an enlarged view of an A part in FIG. 1.

As shown in FIG. 3, the positive electrode lead 12 extends through the openings 32a and 33a of the current collector plate 32 and the gasket 33, respectively, to an upper surface side of the current collector plate 32, and is joined to an upper surface of the current collector plate 32 facing the side of the cap 31. The positive electrode lead 12 is desirably joined to the current collector plate 32 by welding. A periphery of the opening 32a of the current collector plate 32 is curved toward the center of the opening 32a, and is rounded. In other words, a wall of the opening 32a along the thickness direction of the current collector plate 32 is curved as a whole and is formed in an arc shape in the cross-sectional view. A situation is presumed in which the positive electrode lead 12 contacts the periphery of the opening 32a, but by curving the periphery of the opening 32a to remove corners, it is possible to suppress damages to the positive electrode lead 12 caused by such a contact.

The current collector plate 32 is bent toward the sealing assembly 30 at a position distanced from the periphery of the opening 32a at an outer side in the radial direction. In addition, the current collector plate 32 has the protrusion 32b protruded toward the sealing assembly 30 near the bent portion (details of the protrusion 32b will be described later). Around the opening 32a of the current collector plate 32, a first region 32c which is proximate to the electrode assembly 10 than the outer circumferential side of the current collector plate 32 is formed. The first region 32c is formed in an annular shape surrounding the opening 32a, and is placed with a gap from the cap 31. The positive electrode lead 12 is welded to an upper surface of the first region 32c. The upper surface of the first region 32 c is formed, for example, in a flat shape along the radial direction of the outer housing can 20. Between a lower surface of the cap 31 and the upper surface of the first region 32c, a space is formed in which the positive electrode lead 12 can be placed. In addition, this space is in communication with the opening 32a.

At the outer circumferential side of the current collector plate 32, a second region 32d is formed which is positioned at an upper position of the battery than the first region 32c. The second region 32d is formed in an annular shape along the outer periphery of the current collector plate 32. An upper surface of the second region 32d is, for example, approximately parallel with the upper surface of the first region 32c, and is in contact with the lower surface of the cap 31. The upper surface of the second region 32d is not welded to the lower surface of the cap 31. In FIG. 3, a width (length in the radial direction) of the second region 32d is shown shorter than a width of the first region 32c, but no particular limitation is imposed on the relationship between widths of the respective regions.

The current collector plate 32 has the protrusion 32b protruded toward the cap 31, at the welding portion with the cap 31. It is sufficient that the protrusion 32b protrudes toward the cap 31 in comparison to the periphery thereof, but desirably, the protrusion 32b is the portion protruded most toward the cap 31 on the current collector plate 32. In the present embodiment, the protrusion 32b is formed between the first region 32c and the second region 32d, and an upper surface of the protrusion 32b is positioned at an upper position of the battery than the second region 32d. The protrusion 32b is formed in order to achieve a better welding state between the cap 31 and the current collector plate 32.

The circular cylindrical battery 1 is produced, for example, by housing the electrode assembly 10 in the outer housing can 20 and injecting the electrolyte solution, and then laser-welding the cap 31 and the current collector plate 32 of the sealing assembly 30. In this process, the electrolyte solution may adhere to locations on the current collector plate which are to be welded, and welding deficiency may be caused between the cap and the current collector plate due to the adhered electrolyte solution. If the electrolyte solution is present at the welding location, a small hole may be formed in the cap due to vaporized electrolyte solution. The joining of the positive electrode lead 12 to the current collector plate 32 is performed by ultrasound welding or the like, before the electrolyte solution is injected.

The adhesion of the electrolyte solution to the upper surface of the current collector plate 32 is caused by the electrolyte solution creeps up from the outer periphery of the current collector plate 32 and the periphery of the opening 32a during the injecting process of the electrolyte solution. Because the upper surface of the protrusion 32b is higher than the other portions, it is more difficult for the adhesion of the electrolyte solution to occur. When the upper surface of the protrusion 32b and the cap 31 are welded, the welding process is performed in a state without the electrolyte solution, and a superior welding state can thus be realized. Further, even if the electrolyte solution adheres to the upper surface of the protrusion 32b, because a percentage of occupancy of the upper surface of the protrusion 32b over the upper surface of the current collector plate 32 is small, the adhered electrolyte solution can be easily wiped off. Even if the electrolyte solution remains on the upper surface of the protrusion 32b during the welding, a superior welded portion can be formed by providing a gap 34 to be described later.

The protrusion 32b may locally exist on the upper surface of the current collector plate 32, but desirably, the protrusion 32b is formed along the circumferential direction of the current collector plate 32. The protrusion 32b may be formed intermittently along the circumferential direction of the current collector plate 32, but is desirably formed continuously in an annular shape. The protrusion 32b is formed, for example, in a perfect circle shape in the plan view of the current collector plate 32. When the protrusion 32b is formed in the annular shape, the welding portion with the cap 31 may be formed intermittently or continuously along the protrusion 32b. When the welding portion of the cap 31 and the protrusion 32b is formed in the annular shape, the sealing function of the sealing assembly 30 can be further improved, and the sealing property of the circular cylindrical battery 1 is improved. The welding portion may be formed in an approximately equal interval along the circumferential direction of the protrusion 3b formed in a circular ring shape in the plan view.

The protrusion 32b is desirably formed in a bank shape surrounding the opening 32a at positions of approximately equal distance from the outer periphery of the current collector plate 43 and the periphery of the opening 32a. In addition, the protrusion 32b desirably has a flat upper surface. When the upper surface is flat, a welding portion having a strong joining strength can be easily formed. The upper surface of the protrusion 32b is formed, for example, in parallel with the upper surfaces of the first region 32c and the second region 32d. A width W of the upper surface of the protrusion 32b formed in the flat shape is, for example, 1.0-2.5 mm, and is desirably 1.2-1.5 mm. The protrusion 32b desirably has a constant width W along the circumferential direction of the current collector plate 32.

No particular limitation is imposed on a height H1 of the protrusion 32b, but the height H1 is desirably greater than or equal to a height corresponding to 50% of the thickness of the current collector plate 32, and is more desirably a height corresponding to 50-150% of the thickness of the current collector plate 32. The height H1 means a length along the up-and-down direction of the battery (thickness direction of the sealing assembly 30), from the upper surface of the second region 32d to the upper surface of the protrusion 32b. A desirable example of the height H1 is 0.2-0.5 mm. In the present embodiment, a height H2 from the upper surface of the first region 32c is higher than the height H1 from the upper surface of the second region 32d. Because the electrolyte solution tends to more easily creep up from the inner side of the current collector plate 32, by setting the height H2 higher, it is possible to more effectively prevent adhesion of the electrolyte solution to the upper surface of the protrusion 32b. A desirable example of the height H2 is 1~3 mm.

The cap 31 desirably has a recess 31a to which the protrusion 32b of the current collector plate 32 is fitted. With the provision of the recess 31a, alignment, welding, and the like of the cap 31 and the current collector plate 32 can be facilitated, and the sealing function of the sealing assembly 30 can be improved. The recess 31a is formed on a lower surface of the cap 31 facing the side of the current collector plate 32, and desirably, a thickness of the cap 31 at a portion where the recess 31a is formed is thinner than that of the other portions. While the recess 31a becomes the welding portion with the current collector plate 32, by thinning the portion where the recess 31a is formed, it is possible to reduce the power of the laser used for the welding, and the state of the welding portion can be made more stable.

Similar to the protrusion 32b, the recess 31a is formed in an annular shape along the circumferential direction of the current collector plate 32. The recess 31a desirably has a depth and a width such that the entirety of the protrusion 32b may be inserted. A bottom (lower surface) of the recess 31a is formed in a flat shape, so as to contact the upper surface of the protrusion 32b with a wide area. The depth of the recess 31a (length along the up-and-down direction of the battery, from the lower surface of the cap 31 to the bottom of the recess 31a) is desirably similar to the height H1 of the protrusion 32b. In this case, in the state in which the protrusion 32b is inserted into the recess 31a, the upper surface of the second region 32d contacts the lower surface of the cap 31.

In the example configuration shown in FIG. 3, the entire upper surface of the protrusion 32b contacts the lower surface of the recess 31a. A part of the upper surface of the protrusion 32b is welded to the lower surface of the recess 31a. While the welding portion is not shown in FIG. 3, the welding portion, in which the metals forming the cap 31 and the current collector plate 32 are fused and coagulated, is formed at a portion where the recess 31a is in contact with the protrusion 32b. The thickness of the cap 31 at the portion where the recess 31a is formed is, for example, 30-70% of the thickness of the other portions, or 40-60% thereof. A desirable example of the thickness is 0.4-0.8 mm, or 0.5-0.7 mm.

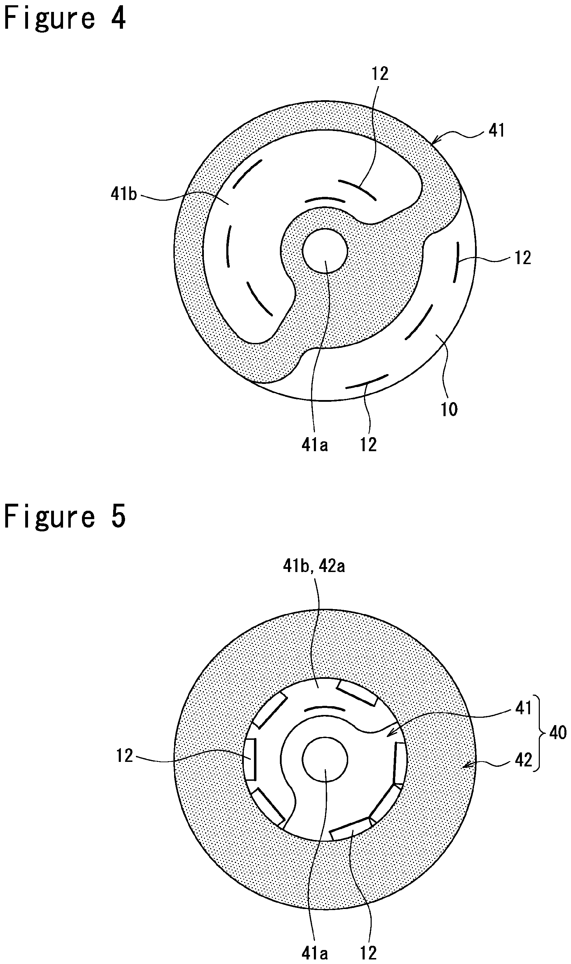

A structure of the upper insulating plate 40 placed between the electrode assembly 10 and the sealing assembly 30 will now be described in detail with reference to FIGs. 3 to 5. FIG. 4 is a plan view of a first insulating plate 41, FIG. 5 is a plan view of a second insulating plate 42, and FIGs. 4 and 5 show the insulating plates placed over the electrode assembly 10. As FIG. 5 also shows the first insulating plate 41, FIG. 5 may alternatively be referred to as a plan view of the upper insulating plate 40.

As shown in FIGs. 3 to 5, the upper insulating plate 40 includes the first insulating plate 41, and the second insulating plate 42 placed nearer to the sealing assembly 30 than the first insulating plate 41. That is, the upper insulating plate 40 has a two-layer structure including two insulating plates. The first insulating plate 41 interposes between the electrode assembly 10 and the positive electrode lead 12, and prevents contact between the negative electrode of the electrode assembly 10 and the positive electrode lead 12. The second insulating plate 42 interposes between the groove portion 23 of the outer housing can 20 and the positive electrode lead 12, and prevents contact between the outer housing can 20 functioning as a negative electrode external terminal, and the positive electrode lead 12.

As described above, because a plurality of the positive electrode leads 12 are provided in an approximately equal interval along the longitudinal direction of the positive electrode 11, a part of the positive electrode leads 12 extends from positions overlapping the groove portion 23 in the up-and-down direction, at the outer circumferential side of the electrode assembly 10. A configuration may also be considered in which an insulating tape is attached to a portion of the positive electrode lead 12 that may possibly contact the groove portion 23, to prevent the electrical connection between the positive electrode lead 12 and the groove portion 23, but in this case, the tape may be peeled off after a long-term usage. According to the circular cylindrical battery 1, with the provision of the second insulating plate 42, it is possible to more reliably prevent the electrical contact between the positive electrode lead 12 and the groove portion 23.

Between the first insulating plate 41 and the second insulating plate 42, at least one positive electrode lead 12 is sandwiched. Of the plurality of positive electrode leads 12, at least a positive electrode lead 12 provided at a position overlapping the groove portion 23 in the up-and-down direction is bent in a center axis direction of the electrode assembly 10, and extends along the upper surface of the first insulating plate 41, in the radial direction of the outer housing can 20. At least this part of positive electrode lead 12 is sandwiched between the first insulating plate 41 and the second insulating plate 42. A positive electrode lead 12 positioned at an outer circumferential side of the electrode assembly 10 than the periphery of the opening 32a of the current collector plate 32 is bent in the center axis direction of the electrode assembly 10, and extends through the opening 32a to the upper surface of the current collector plate 32.

The first insulating plate 41 has an opening 41a formed on the center axis of the electrode assembly 10. The opening 41a has, for example, an approximate perfect circular shape, and has a role of a hole for inserting a presser bar used when the negative electrode current collector plate and the can bottom 22 are made to contact and welded to each other. The first insulating plate 41 further has an opening 41b for passing the positive electrode lead 12 extending from the inner circumferential side of the electrode assembly 10, and is placed over the electrode assembly 10 in a state in which a region from which the positive electrode lead 12 extends at the outer circumferential side of the electrode assembly 10 being exposed. In the example configuration shown in FIG. 4, the openings 41a and 41b are not in communication with each other, and are formed as independent through holes.

The opening 41b is a through hole placed in a distanced manner from the outer periphery of the first insulating plate 41, and a periphery of the opening 41b is desirably formed in an annular shape. In this case, mechanical strength of the first insulating plate 41 can be improved. The opening 41b has, for example, an approximate arch shape or an approximate semicircular shape in the plan view. In the example configuration shown in FIG. 4, five positive electrode leads 12 extend through the opening 41b toward the sealing assembly 30. A band-shaped region curved in an arc shape is formed between the outer periphery of the first insulating plate 41 and the opening 41b, and covers a part of the electrode assembly 10 at the outer circumferential side.

An outer circumferential length of the first insulating plate 41 is shorter than an outer circumferential length of the electrode assembly 10, and the outer periphery of the first insulating plate 41 is formed in an approximate semicircular shape in the plan view. Because of this configuration, the first insulating plate 41 does not cover a part of the electrode assembly 10 in the outer circumferential side, and the positive electrode lead 12 extends from the part of the electrode assembly 10 on the outer circumferential side which is not covered by the first insulating plate 41. In the example configuration shown in FIG. 4, three positive electrode leads 12 extend from the part of the electrode assembly 10 on the outer circumferential side which is not covered by the first insulating plate 41 toward the sealing assembly 30, and two of these three positive electrode leads 12 extend from positions opposing the groove portion 23. In addition, a part of the outer periphery of the first insulating plate 41 is bulged in a direction toward the three positive electrode leads 12. With the bulged portion, the contact between the negative electrode of the electrode assembly 10 and the positive electrode lead 12 can be more reliably prevented.

In the plan view of the electrode assembly 10, the positive electrode leads 12 extending from the inner circumferential side of the electrode assembly 10 are unevenly distributed on one side in the radial direction of the electrode assembly 10, and the positive electrode leads 12 extending from the outer circumferential side of the electrode assembly 10 are unevenly distributed on the other side in the radial direction of the electrode assembly 10. In other words, the predetermined interval of the positive electrode leads 12 along the longitudinal direction of the positive electrode 11 is set in consideration of the improvement of the output characteristic of the battery, and so that such an arrangement of the positive electrode leads 12 is achieved.

The second insulating plate 42 has an opening 42a formed at a center part in the radial direction of the second insulating plate 42, so that the opening 42a overlaps a part of the opening 41b of the first insulating plate 41 in the up-and-down direction. The opening 42a has, for example, a perfect circular shape centered at a center (center in the radial direction) of the second insulating plate 42. The second insulating plate 42 is formed in a ring shape covering the electrode assembly 10 on the outer circumferential side of the electrode assembly 10. The second insulating plate 42 formed in the ring shape covers the positive electrode lead 12 extending from the outer circumferential side of the electrode assembly 10, and interposes between the positive electrode lead 12 and the groove portion 23. The opening 41b overlaps an entire region of the opening 41b of the first insulating plate 41 in the up-and-down direction.

The second insulating plate 42 is placed to cover approximately an entire region of the groove portion 23 below the groove portion 23. An inner periphery of the second insulating plate 42 (periphery of the opening 42a) is desirably positioned at a side nearer to the center of the outer housing can 20 in the radial direction than an inner end of the groove portion 23. On the other hand, the inner periphery of the second insulating plate 42 is desirably positioned at an outer side of the outer housing can 20 in the radial direction than the peripheries of the openings 32a and 33a of the current collector plate 32 and the gasket 33, respectively. The inner periphery and the outer periphery of the second insulating plate 42 are formed in a concentric shape in the plan view, and cover with a same width the outer circumferential side of the electrode assembly 10 over the entire circumference of the electrode assembly 10. The second insulating plate 42 is in contact with, for example, the lower surface of the groove portion 23. The second insulating plate 42 may be joined to the upper surface of the first insulating plate 41.

Each of the thicknesses of the first insulating plate 41 and the second insulating plate 42 is, for example, 0.2-0.6 mm. In FIG. 3, the first insulating plate 41 is shown to be thicker than the second insulating plate 42, but no particular limitation is imposed on the relationship of the thicknesses of the insulating plates.

In a production process of the circular cylindrical battery 1, after the electrode assembly 10 to which the positive electrode lead 12 is connected is inserted into the outer housing can 20 and the electrolyte solution is injected, the upper insulating plate 40 is placed over the electrode assembly 10. In this process, the first insulating plate 41 is placed over the electrode assembly 10, and a part of the positive electrode leads 12 is bent toward the center axis of the electrode assembly 10. Then, the second insulating plate 42 is placed over the bent positive electrode lead 12, to sandwich the positive electrode lead 12 between the two insulating plates. Then, all of the positive electrode leads 12 are bent in the side opposite from the center axis and joined to the upper surface of the current collector plate 32, so that the positive electrode leads 12 extend through the opening 42a of the second insulating plate 42 toward the sealing assembly 30 and a tip side of each of the leads extends along the upper surface of the current collector plate 32. A part of the positive electrode leads 12 extending from the inner circumferential side of the electrode assembly 10 extends through the opening 42a toward the sealing assembly 30 without being bent toward the center of the electrode assembly 10.

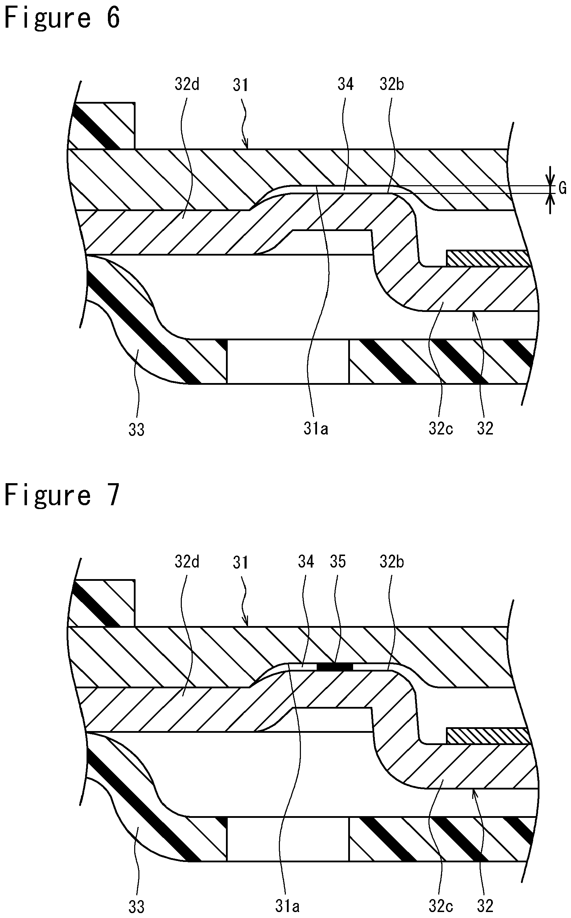

An alternative configuration of the sealing assembly 30 will now be described with reference to FIGs. 6 and 7. FIGs. 6 and 7 are cross-sectional diagrams enlarging the protrusion 32b of the current collector plate 32 and nearby regions thereof. FIG. 6 shows a state before the cap 31 and the current collector plate 32 are welded together, and FIG. 7 shows a state after the welding portion is formed.

As shown in FIGs. 6 and 7, between the recess 31a of the cap 31 and the protrusion 32b of the current collector plate 32, the gap 34 is formed in the thickness direction of the sealing assembly 30 (up-and-down direction of the battery). In the example configuration shown in FIG. 3, the entirety of the upper surface of the protrusion 32b is in contact with the lower surface of the recess 31a even before the welding portion is formed, but in the example configuration shown in FIG. 6, the upper surface of the protrusion 32b and the lower surface of the recess 31a are distanced from each other in the up-and-down direction, and do not contact each other. The form exemplified in FIG. 6 is identical to the form exemplified in FIG. 3 (before welding) except that the gap 34 is present between the upper surface of the protrusion 32b and the lower surface of the recess 31a.

As shown in FIG. 7, the gap 34 is formed between the upper surface of the protrusion 32b and the lower surface of the recess 31a at least around a welding portion 35. The gap 34 may be locally formed surrounding the welding location, but desirably is formed in an annular shape along the protrusion 32b. If a certain amount of electrolyte solution is present on the upper surface of the protrusion 32b when the laser welding is applied, vapor generated by vaporization of the electrolyte solution may spread the fused metal and hole formation may be caused, but, with the provision of the gap 34, an escape route for the vapor can be secured, and the hole formation of the welding portion can be suppressed in a high degree. While the adhesion of the electrolyte solution to the welding location can be suppressed by the effect of the protrusion 32b, by providing the gap 34, the hole formation on the welding portion 35 can be prevented even when a large amount of electrolyte solution exists at the welding location due to some reasons.

The welding portion 35 is formed by the metal forming the cap 31 being fused by laser irradiation to the cap 31. In the present embodiment, the fused metal of the cap 31 is connected to the upper surface of the protrusion 32b which opposes the cap 31 with the gap 34 therebetween, and fuses the metal of the current collector plate 32 to form the welding portion 35. In other words, the fused metal of the cap 31 extends across the gap 34 and connects the cap 31 and the current collector plate 32.

A spacing G of the gap 34 is desirably less than 1/3 of a thickness of the cap 31 at a portion where the recess 31a is formed (laser irradiated portion), and is desirably less than or equal to 1/4 of the thickness of the cap 31. The spacing G is a length from the upper surface of the protrusion 32b to the lower surface of the recess 31a along the thickness direction of the sealing assembly 30. When the spacing G exceeds 1/3 of the thickness of the laser irradiated portion, a case may be considered in which, for example, the metal of the cap 31 which fuses and falls may be cut in the middle, and the welding portion which connects the cap 31 and the current collector plate 32 cannot be formed.

No particular limitation is imposed on a lower limit of the spacing G of the gap 34, and as an example, the lower limit is greater than or equal to 3% of the thickness of the cap 31 at the portion where the recess 31a is formed. A desirable range of the spacing Gis, for example, 3-30%, or 5-25%. When the spacing G is within these ranges, even if the electrolyte solution is present in the welding location due to some reasons, a smooth welding portion without the holes may be more reliably formed. The gap 34 may be formed, for example, by setting the height of the protrusion 32b slightly lower than that in the form exemplified in FIG. 3.

In the present embodiment, a space wider than the gap 34 is formed between a portion positioned at an inner side of the current collector plate 32 than the protrusion 32b and the cap 31, and the gap 34 is in communication with this space. The current collector plate 32 is bent toward the electrode assembly 10 at an end on the inner circumferential side of the protrusion 32b, and has the first region 32c having a height which is slightly lower than the protrusion 32b. The spacing between the lower surface of the cap 31 and the upper surface of the first region 32c is larger than the spacing G of the gap 34, and a relatively large space exists at an inner side of the sealing assembly 30 than the protrusion 32b. This space is also connected to the inside of the outer housing can 20 via the opening 32a of the current collector plate 32.

The upper surface of the protrusion 32b is not entirely in contact with the lower surface of the recess 31a, and a portion positioned between the protrusion 32b and the first region 32c is also not in contact with the lower surface of the cap 31. Because of this, a passageway for the vapor from the gap 34 to the space is secured. By making the gap 34 and the above-described space in communication with each other, the vapor can more effectively escape, and the stability of welding can be improved.

### EXAMPLES

The present disclosure will now be described in further detail with reference to Examples. The present disclosure, however, is not limited to the Examples.

### <Example 1>

A wound-type electrode assembly to which a plurality of positive electrode leads are connected was housed in an outer housing can of a circular cylindrical shape with a bottom, and a non-aqueous electrolyte solution was injected. Then, an upper insulating plate was placed over the electrode assembly, and the outer housing can was spinningmachined, to form a groove portion. A current collector plate was placed over the groove portion with a gasket therebetween, and the positive electrode lead was ultrasound-welded on the upper surface of the current collector plate. Then, after vacuum degassing was performed, a cap was placed over the current collector plate, and laser was irradiated on the upper surface of the cap, to weld the cap and the current collector plate. Finally, an upper end portion of the outer housing can was crimped with respect to the cap, to obtain a circular cylindrical battery.

The cap, the current collector plate, and the gasket formed a sealing assembly blocking an opening of the outer housing can. A protrusion formed in an annular shape was formed on the upper surface of the current collector plate, a recess to which the protrusion is fitted was formed on a lower surface of the cap, and an upper surface of the protrusion and a lower surface of the recess were laser-welded. The sealing assembly had the structure as shown in FIG. 1. A height of the protrusion and the like are as follows.
Height H1 of the protrusion: 0.4 mm
Height H2 of the protrusion: 1.2 mm
Width W of the upper surface of the protrusion: 2.0 mm
Thickness of the cap at the portion where recess was formed: 0.6 mm

### <Comparative Example 1>

A circular cylindrical battery was produced in a manner similar to Example 1 except that the sealing assembly was formed using a cap without the recess described above and a current collector plate without the protrusion described above.

### <Assessment of Welding Portion>

Ten batteries of Example 1 and ten batteries of Comparative Example 1 were produced, and presence or absence of hole formation at the welding portion (presence or absence of through holes for solution leakage) was assessed through observation of an outer appearance of the welding portion between the cap and the current collector plate. As a result, no hole formation was found in all ten batteries of Example 1. On the other hand, the hole formation was found in six of the ten batteries of Comparative Example. It can be deduced that, in the batteries of Comparative Example, for example, the electrolyte solution had adhered to the welding location of the current collector plate during the vacuum degassing process, and a small hole was formed in the cap due to the electrolyte solution vaporized by the laser irradiation.

As described, according to the circular cylindrical battery 1 having the structure described above (battery of Example 1), by forming the protrusion 32b on the upper surface of the current collector plate 32 of the sealing assembly 30, the welding state of the cap 31 and the current collector plate 32 can be stabilized and a superior welded state can be obtained. The electrolyte solution does not tend to creep up to the upper surface of the protrusion 32b in the production process of the battery, and does not tend to adhere thereto. In addition, even when the electrolyte solution is adhered, the electrolyte solution can be easily wiped off. Because of this, it is possible to more reliably prevent occurrence of the hole formation due to irradiation of laser to the portion to which the electrolyte solution is adhered.

In addition, even when a small amount of electrolyte solution was intentionally applied using a swab on the upper surface of the protrusion of the current collector plate used in Example 1, no hole formation of the welding portion was found for all ten batteries (Application Experiment 1).

### <Example 2>

A circular cylindrical battery was produced in a manner similar to Example 1 except that the protrusion of the current collector plate was polished, so that the height was reduced by 0.05 mm, and a gap (with a spacing G = 0.05 mm) as shown in FIG. 6 was formed between the upper surface of the protrusion and the lower surface of the recess of the cap.

### <Example 3>

A circular cylindrical battery was produced in a manner similar to Example 2 except that the spacing G of the gap was changed to 0.10 mm.

### <Example 4>

A circular cylindrical battery was produced in a manner similar to Example 2 except that the spacing G of the gap was changed to 0.15 mm.

### <Comparative Example 2>

A circular cylindrical battery was produced in a manner similar to Example 2 except that the spacing G of the gap was changed to 0.20 mm.

### [Assessment of Welding Portion]

Ten batteries were produced for each of Examples 1 to 4 and Comparative Example 2, and the electrolyte solution was intentionally applied using a swab on the upper surface of each of the current collector plates. Then, the cap was placed over the current collector plate so that the protrusion is fitted to the recess of the cap, and laser for welding was irradiated to the portion of the cap where the recess was formed, from an upper surface side of the cap, which is the opposite side from the recess. An amount of application of the electrolyte solution was set to about twice of the amount of application of the electrolyte solution in Application Experiment 1 described above (Application Experiment 2), and to about four times the amount of application of the electrolyte solution in Application Experiment 1 (Application Experiment 3). Through observation of the outer appearance of the laser irradiated portion, present or absence of the hole formation at the welding portion and presence or absence of the formation of the welding portion were assessed. TABLE 1 shows results of the assessment. Numerical values shown in each row of Application Experiments show the numbers of batteries for which the hole formation of the welding portion was found among the ten batteries.

**[TABLE 1]**

| | EXAMPLE 1 | EXAMPLE 2 | EXAMPLE 3 | EXAMPLE 4 | COMPARATIVE EXAMPLE 2 |
|---|---|---|---|---|---|
| SPACING G | 0mm | 0.05mm | 0.10mm | 0.15mm | 0.20mm |
| APPLICATION EXPERIMENT 2 | 1 | 0 | 0 | 0 | CANNOT BE WELDED |
| APPLICATION EXPERIMENT 3 | 3 | 0 | 0 | 0 | CANNOT BE WELDED |

As shown in TABLE 1, when there is no gap between the upper surface of the protrusion of the current collector plate and the lower surface of the recess of the cap, that is, when the laser is irradiated in a state where the upper surface of the protrusion and the lower surface of the recess are in contact with each other, hole formation of the welding portion was found in one battery in Application Experiment 2 and in three batteries in Application Experiment 3 (Example 1). In the battery of Example 1, adhesion of the electrolyte solution to the welding location does not tend to occur due to the effect of the protrusion of the current collector plate, but, when a large amount of the electrolyte solution exists on the welding location due to some reasons, the hole formation may occur in the welding portion even in the battery of Example 1.

In the contrary, in the batteries of each of Examples 2 to 4, the hole formation was not found in all ten batteries. It can be deduced that, with the provision of the gap between the upper surface of the protrusion and the lower surface of the recess, the gap formed an escape route for the vapor of the electrolyte solution generated due to the laser irradiation, an amount of spread of the fused metal was reduced, and the hole formation was prevented. As can be understood from the result of Example 1, when there is no gap, an amount of spread of the fused metal may be increased due to the vapor discharged through the welding portion.

On the other hand, when the spacing G of the gap is increased to 0.20 mm corresponding to 1/3 of the thickness of the cap at the portion where the laser is irradiated, the welding portion connecting the current collector plate and the cap was not formed (Comparative Example 2). That is, in a state in which a certain amount of electrolyte solution exists at the laser irradiated portion, in order to form a smooth welding portion without any hole, a gap having a spacing G of less than 0.20 mm must be provided between the upper surface of the protrusion and the lower surface of the recess, under the conditions of Examples and Comparative Examples of the present disclosure.

The above-described embodiment may be suitably altered in design within a range of not adversely affecting the objective of the present disclosure. For example, it is possible to set, for the first electrode and the second electrode of the electrode assembly, the first electrode as the negative electrode and the second electrode as the positive electrode. In addition, it is possible to use an insulating plate of a single-layer structure as the upper insulating plate, and to adhere an insulating tape to a portion which may possibly contact the groove portion of the positive electrode tab.

### REFERENCE SIGNS LIST

1 circular cylindrical battery, 10 electrode assembly, 11 positive electrode, 12 positive electrode lead, 20 outer housing can, 21 side wall, 22 can bottom, 23 groove portion, 30 sealing assembly, 31 cap, 31a recess, 32 current collector plate, 32a, 33a, 41a, 41b, 42a opening, 32b protrusion, 32c first region, 32d second region, 33 gasket, 33b through hole, 34 gap, 35 welding portion, 40 upper insulating plate, 41, first insulating plate, 42 second insulating plate

## Claims

1. A sealed battery comprising:
an electrode assembly;
an outer housing can that houses the electrode assembly; and
a sealing assembly that blocks an opening of the outer housing can, wherein
the sealing assembly includes a cap, and a current collector plate which is placed at a side nearer to the electrode assembly than the cap and which is welded to the cap, and
the current collector plate has a protrusion which protrudes toward the cap at a welding portion with the cap.

2. The sealed battery according to claim 1, wherein
the cap has a recess to which the protrusion of the current collector plate is fitted.

3. The sealed battery according to claim 2, wherein
between the protrusion and the recess, a gap is formed in a thickness direction of the sealing assembly at least around the welding portion.

4. The sealed battery according to claim 3, wherein
a space which is wider than the gap is formed between a portion positioned at an inner side of the current collector plate than the protrusion and the cap, and
the gap is in communication with the space.

5. The sealed battery according to any one of claims 1 to 4, wherein
the protrusion of the current collector plate is formed in an annular shape.

6. The sealed battery according to any one of claims 1 to 5, further comprising:
an electrode lead that connects an electrode which is a part of the electrode assembly and the current collector plate, wherein
a plurality of the electrode leads are provided in a predetermined interval along a longitudinal direction of the electrode.
